# DEMANDE DE BREVET EUROPEEN

(11) **EP 1 195 671 A1**
(43) Date de publication de la demande: **10.04.2002**
(21) Numéro de dépôt: 01402504.3
(22) Date de dépôt: 28.09.2001
(51) Int. Cl.: G05D 23/13, F01P 7/16

(54) **Thermostat de circuit de refroidissement de moteur de véhicule automobile**

(30) Priorité: 05.10.2000 FR 0012709
(71) Demandeur: Renault, 92100 Boulogne Billancourt (FR)
(72) Inventeur: Desneux, Alexandre, 92150 Suresnes (FR); Hibon, Olivier, 27400 Louviers (FR); Reverseau, Denis, 91940 Les Ulis (FR)

(57) **Abrégé**

L'invention propose un thermostat (10) de circuit de refroidissement (12), du type qui est agencé à l'intérieur d'un boîtier (14) comportant un orifice d'entrée (18) relié à un conduit (20) provenant du moteur, dans une paroi latérale, un premier orifice de sortie (22) relié à un conduit de dérivation (24), et, dans une paroi supérieure orthogonale à la paroi latérale, un second orifice de sortie (26) relié à un conduit de radiateur (28), du type comportant un clapet (38) muni d'un élément mobile (54) qui est susceptible d'occuper une position extrême à froid et une position à chaud en fonction de la température du liquide de refroidissement, caractérisé en ce que l'élément mobile (54) comporte au moins une extension (58) qui, dans la position extrême à froid, ouvre complètement le premier orifice de sortie (22). et qui, dans la position à chaud, obture au moins partiellement le premier orifice de sortie (22).

## Description

L'invention concerne un thermostat de circuit de refroidissement.

L'invention concerne plus particulièrement un thermostat de circuit de refroidissement, notamment du moteur d'un véhicule automobile, du type qui est agencé à l'intérieur d'un boîtier comportant, dans une paroi inférieure, un orifice d'entrée relié à un conduit provenant du moteur, dans une paroi latérale, un premier orifice de sortie relié à un conduit pour le fonctionnement du circuit à froid, ou conduit de dérivation, et, dans une paroi supérieure qui est sensiblement orthogonale à la paroi latérale, un second orifice de sortie relié à un conduit pour le fonctionnement du circuit à chaud, ou conduit de radiateur, du type comportant un clapet muni d'un élément mobile qui est susceptible d'occuper une position extrême à froid dans laquelle il obture le second orifice de sortie et une position à chaud dans laquelle il ouvre au moins partiellement le second orifice de sortie, et du type dans lequel les déplacements de l'élément mobile de clapet, suivant un axe de translation, sont commandés en fonction de la température du liquide de refroidissement.

Généralement on utilise un tel type de thermostat dans le circuit de refroidissement du moteur d'un véhicule pour limiter ou interrompre la circulation du liquide de refroidissement, en vue de permettre au moteur d'atteindre rapidement sa température de fonctionnement et de la conserver avec le moins de variations possible.

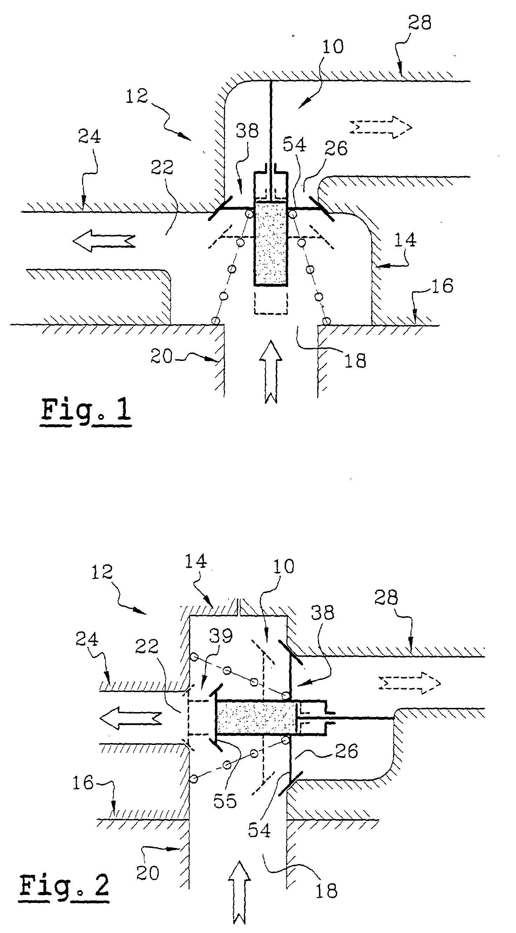

On a représenté sur la figure 1 un thermostat 10 du type à simple effet selon l'état de la technique.

Pendant la montée en température du moteur, le clapet 38 du thermostat 10 obture l'orifice de sortie 26 qui est relié au conduit de radiateur 28, de manière que le liquide de refroidissement circule à travers un conduit de dérivation 24, ou canal de « by-pass », et retourne dans le moteur sans passer par le radiateur, ce qui permet d'accélérer la montée en température du moteur.

Ce mode de fonctionnement du thermostat 10 est représenté en trait continu sur la figure 1.

Lorsque le moteur atteint sa température de fonctionnement, le thermostat 10 ouvre l'orifice de sortie 26 qui est relié au conduit de radiateur 28, de manière que le liquide de refroidissement circule dans le radiateur, où il est refroidi, puis retourne dans le moteur afin de le refroidir.

Ce mode de fonctionnement du thermostat 10 est représenté en trait pointillé sur la figure 1.

Dans le cas d'un thermostat 10 du type à simple effet, lorsque le moteur atteint sa température de fonctionnement, le débit du liquide de refroidissement dans le conduit de radiateur 28 n'est pas à son maximum car une partie du liquide circule dans le conduit de dérivation 24.

Pour remédier à ce problème on utilise un thermostat 10 du type à double effet, tel que celui qui est représenté sur la figure 2.

Ce thermostat 10 comporte un premier élément mobile 54 de clapet 38 qui obture l'orifice de sortie 26 relié au conduit de radiateur 28 pendant la montée en température du moteur.

Ce mode de fonctionnement du thermostat 10 du type à double effet est similaire à celui du thermostat de la figure 1 et il est représenté en trait continu sur la figure 2.

Le thermostat 10 du type à double effet comporte un second élément mobile 55 de clapet 39 qui obture l'orifice de sortie 22 relié au conduit de dérivation 24 lorsque le moteur atteint sa température de fonctionnement.

Ce mode de fonctionnement est représenté en trait pointillé sur la figure 2.

Plusieurs problèmes techniques se posent néanmoins.

Le thermostat du type à double effet est complexe à réaliser.

De plus, le remplacement d'un thermostat du type à simple effet par un thermostat du type à double effet nécessite des modifications importantes du boîtier contenant le thermostat.

En effet, le boîtier comportant un thermostat du type à simple effet a sa paroi comportant l'orifice de sortie relié au conduit de dérivation qui est orthogonale à sa paroi comportant l'orifice de sortie relié au conduit de radiateur.

Au contraire, le boîtier comportant un thermostat du type à double effet a ses parois comportant les orifices de sortie qui sont parallèles, de manière que les orifices de sortie soit alignés suivant l'axe de translation des deux clapets.

L'invention vise à proposer un thermostat du type à double effet qui soit plus simple à réaliser et qui ne nécessite pas de modifications importantes de l'architecture du boîtier, notamment pour permettre une interchangeabilité entre les thermostats du type à simple effet et les thermostats du type à double effet.

Dans ce but, l'invention propose un thermostat du type décrit précédemment, caractérisé en ce que l'élément mobile de clapet comporte une extension qui, dans la position extrême à froid de l'élément mobile de clapet, ouvre complètement le premier orifice de sortie et qui, dans la position à chaud de l'élément mobile de clapet, obture au moins partiellement le premier orifice de sortie.

Selon d'autres caractéristiques de l'invention :
- l'extension comporte une guillotine, sensiblement parallèle à l'axe de translation, qui est susceptible d'obturer au moins partiellement le premier orifice de sortie ;
- le thermostat comporte un dispositif de rappel élastique de l'élément mobile de clapet vers sa position extrême à froid ;
- les déplacements de l'élément mobile de clapet sont commandés par la dilatation d'un élément sensible tel qu'une matière cireuse ;
- le thermostat comporte un piston qui est fixe par rapport au boîtier et qui est plongé à l'intérieur d'une capsule, qui est solidaire en translation avec l'élément mobile de clapet, contenant l'élément sensible, de manière que la dilatation de l'élément sensible provoque le déplacement de la capsule par rapport au piston et provoque le déplacement de l'élément mobile de clapet vers sa position à chaud ;
- le boîtier est agencé à la sortie de la culasse du moteur.

D'autres caractéristiques et avantages de l'invention apparaîtront à la lecture de la description détaillée qui suit pour la compréhension de laquelle on se reportera aux dessins annexés dans lesquels :
- la figure 1 est un schéma de principe qui représente une portion de circuit de refroidissement comportant un thermostat du type à simple effet selon l'état de la technique ;
- la figure 2 est un schéma similaire au précédent qui représente un thermostat du type à double effet selon l'état de la technique ;
- la figure 3 est un schéma similaire aux précédents qui représente un thermostat réalisé conformément aux enseignements de l'invention dans sa position à froid ;
- la figure 4 est un schéma similaire aux précédents qui représente le thermostat de la figure 3 dans sa position à chaud.

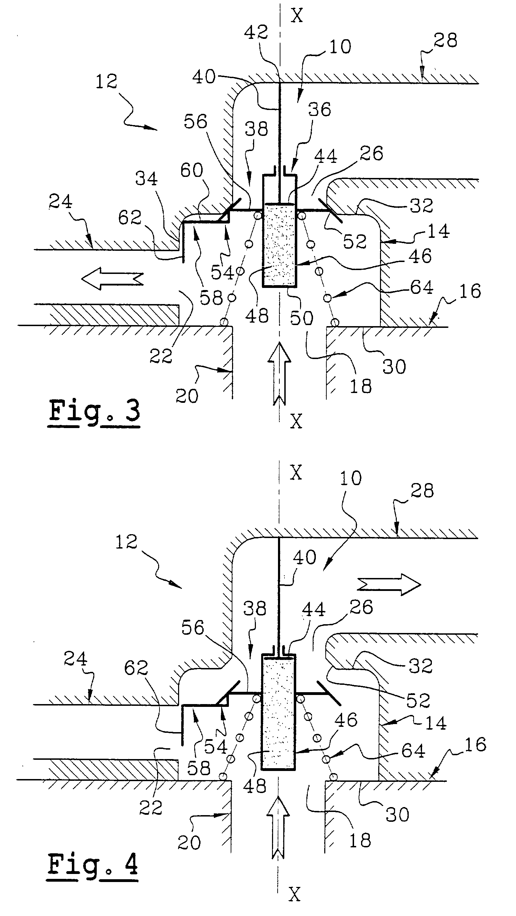

On a représenté schématiquement sur la figure 3 une portion de circuit de refroidissement 12 d'un moteur de véhicule comportant un thermostat 10 du type à double effet qui est réalisé conformément aux enseignements de l'invention.

Le thermostat 10 est agencé à l'intérieur d'un boîtier 14, ou boîtier de sortie d'eau, qui est monté ici à la sortie de la culasse 16 du moteur.

Le boîtier 14 comporte un orifice d'entrée 18 qui est relié au conduit de sortie 20 du liquide de refroidissement provenant de la culasse 16.

Le boîtier 14 comporte aussi un premier orifice de sortie 22 qui est relié à un conduit de dérivation 24 du circuit de refroidissement 12 du moteur, et un second orifice de sortie 26 qui est relié à un conduit de radiateur 28 du circuit de refroidissement 12.

Le conduit de dérivation 24 transporte le liquide de refroidissement vers le conduit d'entrée (non représenté) de la culasse 16.

Le conduit de radiateur 28 transporte le liquide de refroidissement vers le radiateur (non représenté) du circuit de refroidissement 12.

Dans la suite de la description on définira arbitrairement une orientation axiale de haut en bas suivant un axe X-X vertical qui correspond à l'orientation de la figure 3.

On définit une orientation transversale par rapport à l'axe X-X.

Le boîtier 14 est ici de forme globalement cylindrique suivant l'axe X-X, mais il pourrait aussi être de forme parallélépipédique.

Le boîtier 14 comporte une paroi transversale inférieure 30, une paroi transversale supérieure 32 et une paroi axiale 34.

La paroi transversale inférieure 30 est percée par l'orifice d'entrée 18 du liquide de refroidissement, et la paroi transversale supérieure 32 est percée par le second orifice de sortie 26.

La paroi axiale 34 du boîtier 14 est percée par le premier orifice de sortie 22, à gauche sur la figure 3.

Le thermostat 10 comporte ici un vérin 36 d'orientation axiale et un clapet 38.

Le vérin 36 comporte, d'une part, une tige de piston 40 qui est fixée par son extrémité axiale supérieure 42 au conduit de radiateur 28 et qui porte, à son extrémité axiale inférieure un piston 44 et, d'autre part, une capsule 46 cylindrique, qui est guidée en coulissement axial sur la tige de piston 40.

La capsule 46 contient un élément sensible de dilatation, par exemple une matière cireuse 48, qui est interposé entre le piston 44 et la paroi transversale inférieure 50 de la capsule 46, de manière que la dilatation de la matière cireuse 48 provoque, par réaction, le déplacement de la capsule 46, vers le bas, par rapport au piston 44.

Le clapet 38 comporte un siège 52 qui est réalisé dans la paroi transversale supérieure 32 du boîtier 14, autour du second orifice de sortie 26, et un élément mobile 54 qui est monté solidaire en coulissement axial sur la capsule 46.

L'élément mobile 54 de clapet 38 comporte un disque 56, d'orientation transversale, qui est susceptible d'obturer entièrement le second orifice de sortie 26.

Le disque 56 comporte une extension 58, du côté du premier orifice de sortie 22.

L'extension 58 comporte une plaque de support 60 qui s'étend transversalement vers la paroi axiale 34 du boîtier 14.

La plaque 60 porte une guillotine 62 qui est adjacente à la paroi axiale 34 du boîtier et qui s'étend verticalement vers le bas, parallèlement à la paroi axiale 34.

On note que la guillotine 62 a une hauteur inférieure à la hauteur de la paroi axiale 34.

La hauteur de la guillotine 62 est ici légèrement inférieure au diamètre du premier orifice de sortie 22.

Selon une variante de réalisation (non représentée) de l'invention, la guillotine 62 a une hauteur sensiblement égale au diamètre du premier orifice de sortie 22, de manière à pouvoir obturer complètement le premier orifice de sortie 22.

L'élément mobile 54 de clapet 38 est susceptible de coulisser axialement, suivant l'axe de translation X-X, avec la capsule 46 entre une position haute, ou position extrême à froid Pf, et une position basse, ou position à chaud Pc.

Dans la position extrême à froid Pf de l'élément mobile 54 de clapet 38, qui est représentée sur la figure 3, le disque 56 obture le second orifice de sortie 26, et la guillotine 62 est décalée axialement vers le haut par rapport au premier orifice de sortie 22.

Dans la position à chaud Pc de l'élément mobile 54 de clapet 38, qui est représentée sur la figure 4, le disque 56 est décalé axialement vers le bas par rapport au second orifice de sortie 26, et la guillotine 62 obture ici presque entièrement le premier orifice de sortie 22.

Avantageusement, le thermostat 10 comporte un dispositif de rappel élastique, tel qu'un ressort 64, qui sollicite l'élément mobile 54 de clapet 38 vers sa position extrême à froid Pf, ici vers le haut.

Le ressort 64 est par exemple agencé à l'intérieur du boîtier 14 et il s'appuie axialement vers le bas sur la paroi transversale inférieure 30 du boîtier 14 et vers le haut sur le disque 56 de l'élément mobile 54 de clapet 38.

On expliquera maintenant le fonctionnement du thermostat 10 et le passage de la position extrême à froid Pf à la position à chaud Pc du clapet 38.

Tant que le moteur n'a pas atteint sa température de fonctionnement, c'est à dire tant que le liquide de refroidissement reste au-dessous d'une température de seuil Ts, la température à l'intérieur du boîtier 14 n'est pas assez élevée pour dilater suffisamment la matière cireuse 48, qui doit s'opposer à la force de rappel du ressort 64, de manière à ouvrir le clapet 38.

L'élément mobile 54 de clapet 38 occupe alors sa position extrême à froid Pf, et le liquide de refroidissement circule donc depuis la culasse 16 vers le conduit de dérivation 24.

Progressivement, le moteur atteint sa température de fonctionnement, c'est à dire que la température du liquide de refroidissement passe au-dessus de la température de seuil Ts, et la température augmente simultanément à l'intérieur du boîtier 14.

La matière cireuse 48 se dilate de plus en plus et provoque, par réaction, le déplacement axial de la capsule 46, vers le bas, par rapport au piston 44, et par conséquent le déplacement de l'élément mobile 54 de clapet 38 vers sa position à chaud Pc.

Le second orifice de sortie 26 est alors ouvert et le premier orifice de sortie 22 est alors partiellement obturé par la guillotine 62, et le liquide de refroidissement circule donc principalement depuis la culasse 16 vers le conduit de radiateur 28.

Lorsque la température du liquide de refroidissement descend au-dessous de sa valeur de seuil Ts, la capsule 46 et l'élément mobile 54 de clapet 38 coulissent axialement vers le haut, sous l'effet conjugué de la contraction de la matière cireuse 48 et de la sollicitation du ressort 64 de rappel, jusqu'à ce que l'élément mobile 54 de clapet 38 occupe à nouveau sa position extrême à froid Pf.

On note que le thermostat 10 selon l'invention peut être réalisé à partir d'un thermostat du type à simple effet dans lequel on modifie l'élément mobile de clapet en lui ajoutant au moins une extension susceptible d'obturer le premier orifice de sortie 22 dans la position à chaud du clapet.

## Revendications

1. Thermostat (10) de circuit de refroidissement (12), notamment du moteur d'un véhicule automobile, du type qui est agencé à l'intérieur d'un boîtier (14) comportant, dans une paroi inférieure (30), un orifice d'entrée (18) relié à un conduit (20) provenant du moteur, dans une paroi latérale (34), un premier orifice de sortie (22) relié à un conduit (24) pour le fonctionnement du circuit (12) à froid, ou conduit de dérivation, et, dans une paroi supérieure (32) qui est sensiblement orthogonale à la paroi latérale (34), un second orifice de sortie (26) relié à un conduit (28) pour le fonctionnement du circuit (12) à chaud, ou conduit de radiateur, du type comportant un clapet (38) muni d'un élément mobile (54) qui est susceptible d'occuper une position extrême à froid (Pf) dans laquelle il obture le second orifice de sortie (26) et une position à chaud (Pc) dans laquelle il ouvre au moins partiellement le second orifice de sortie (26), et du type dans lequel les déplacements de l'élément mobile (54) de clapet (38), suivant un axe de translation (X-X), sont commandés en fonction de la température du liquide de refroidissement,
**caractérisé en ce que** l'élément mobile (54) de clapet (38) comporte une extension (58) qui, dans la position extrême à froid (Pf) de l'élément mobile (54) de clapet (38), ouvre complètement le premier orifice de sortie (22) et qui, dans la position à chaud (Pc) de l'élément mobile (54) de clapet (38), obture au moins partiellement le premier orifice de sortie (22).

2. Thermostat (10) selon la revendication précédente, **caractérisé en ce que** l'extension (58) comporte une guillotine (62), sensiblement parallèle à l'axe de translation (X-X), qui est susceptible d'obturer au moins partiellement le premier orifice de sortie (22).

3. Thermostat (10) selon l'une quelconque des revendications précédentes, **caractérisé en ce qu'**il comporte un dispositif (64) de rappel élastique de l'élément mobile (54) de clapet (38) vers sa position extrême à froid (Pf).

4. Thermostat (10) selon l'une quelconque des revendications précédentes, **caractérisé en ce que** les déplacements de l'élément mobile (54) de clapet (38) sont commandés par la dilatation d'un élément sensible (48) tel qu'une matière cireuse.

5. Thermostat (10) selon la revendication précédente, **caractérisé en ce qu'**il comporte un piston (44) qui est fixe par rapport au boîtier (14) et qui est plongé à l'intérieur d'une capsule (46), qui est solidaire en translation avec l'élément mobile (54) de clapet (38), contenant l'élément sensible (48), de manière que la dilatation de l'élément sensible (48) provoque le déplacement de la capsule (46) par rapport au piston (44) et provoque le déplacement de l'élément mobile (54) de clapet (38) vers sa position à chaud (Pc).

6. Thermostat (10) selon l'une quelconque des revendications précédentes, **caractérisé en ce que** le boîtier (14) est agencé à la sortie de la culasse (16) du moteur.
